(19) Europäisches Patentamt / European Patent Office / Office européen des brevets

(11) **EP 2 116 440 B1**

(12) **EUROPÄISCHE PATENTSCHRIFT**

(45) Veröffentlichungstag und Bekanntmachung des Hinweises auf die Patenterteilung:
**31.10.2012 Patentblatt 2012/44**

(51) Int Cl.:
*B60W 30/08* $^{(2012.01)}$         *B62D 1/28* $^{(2006.01)}$

(21) Anmeldenummer: **09004639.2**

(22) Anmeldetag: **31.03.2009**

(54) **Spurführungssystem**

Tracking system

Système de guidage de voie

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **08.05.2008 DE 102008022606**

(43) Veröffentlichungstag der Anmeldung:
**11.11.2009 Patentblatt 2009/46**

(73) Patentinhaber: **MAN Truck & Bus AG**
**80995 München (DE)**

(72) Erfinder:
• **Schwertberger, Walter**
**82278 Althegnenberg (DE)**
• **Brummer, Markus**
**85301 Schweitenkirchen (DE)**
• **Heyes, Daniel**
**81247 München (DE)**
• **Ewers, Marcel**
**37696 Marienmünster (DE)**

(56) Entgegenhaltungen:
WO-A-2007/145564     DE-A1- 10 218 010
DE-A1-102005 002 760     DE-A1-102005 025 387

**Beschreibung**

Die Erfindung bezieht sich auf ein Verfahren zur Führung eines Nutzfahrzeugs auf einer Fahrbahn gemäß dem Oberbegriff des Anspruchs 1.

Nach der DE 103 16 413 sind ein Verfahren und eine Vorrichtung zur Spurführung eines Fahrzeugs bekannt, bei dem seitliche Spurbegrenzungsmarkierungen detektiert und zur Korrektur der Bewegungsrichtung des Fahrzeugs ausgewertet werden. Zur Korrektur der Fahrzeugbewegungsrichtung wird innerhalb der markierten Fahrspur an wenigstens einem der Fahrzeugräder ein Bremsgriff durchgeführt. Überdies sind Assistenzsysteme bekannt, die den Fahrer bei der Spurhaltung unterstützen. Droht ein Fahrzeug von der Straße abzukommen, wird der Fahrer gewarnt oder auch aktiv beim Zurückfahren in seine Spur unterstützt. Nachteilig ist jedoch, dass die aus dem Stand der Technik bekannten Spurführungssysteme in der Regel ein für einen Pkw-Betrieb ausgelegtes Fahrverhalten zu Grunde legen. Es ist daher Aufgabe der Erfindung, ein Spurführungssystem zu schaffen, das den technischen und fahrdynamischen Gegebenheiten eines Nutzfahrzeugs entspricht.

Aus der DE 10 2005 025 387 A1 ist ein Verfahren zur Fahrerwarnung und/oder zum aktiven Eingriff in die Fahrdynamik bekannt, falls ein Verlassen der Fahrspur droht. Mittels eines Bildsensors werden Fahrspurmarkierungen in der Umgebung des Fahrzeugs erfasst, wobei wenigstens ein Sicherheitsabstand von einer Fahrbahnmarkierung vorgegeben ist. Bei Unterschreitung des Sicherheitsabstands erfolgt eine Fahrerwarnung und/oder ein Eingriff in die Fahrdynamik. Der wenigstens eine Sicherheitsabstand wird dabei in Abhängigkeit von der Verkehrssituation oder einer Kombination daraus gewählt. Hierzu wird ein Sicherheitswert aus einer Speichereinrichtung ausgelesen, in welcher verkehrsspezifische und/oder fahrverhaltensspezifische Vorgabewerte gespeichert sind.

Aus der WO 2007/145564 A1 ist ein Verfahren und eine Vorrichtung zur Steuerung eines Fahrzeuges bekannt. Das Verfahren umfasst ein Spurführungssystem, das Gegenstände aufspürt, die sich in den Fahrspuren befinden, die an die Fahrspur angrenzen, die gegenwärtig vom Fahrzeug befahren wird. Die Position des Fahrzeugs in der befahrenen Fahrspur wird dann an die ermittelten Fahrzeuge angepasst.

Die DE 10 2005 002 760 A1 offenbart ein Verfahren zur Unfallvermeidung von Kraftfahrzeugen. Das Verfahren umfasst folgende Schritte:

1. Erstellung eines Lagebildes der Umgebung des Fahrzeugs mittels eines Erfassungssystems.

2. Zuordnung eines Dynamikmodells zu den erfassten Objekten und zum erfindungsgemäßen Fahrzeug, wodurch ein Umfeldmodell erstellt wird, dessen Koordinatensystem fahrbahnfest ist und sich mit dem Fahrzeug mitbewegt.

3. Durchführung einer Kollisionserkennung bezüglich der erfassten Objekte zum erfindungsgemäßen Fahrzeug. Planung einer Kollisionsvermeidung bei bevorstehender Kollision. Hierbei ist die Kollisionsvermeidung ein im Grenzbereich des Fahrzeugs angesiedeltes Notmanöver, das Bremsen und Ausweichen nach links und rechts auf einer prädizierten Trajektorie umfasst. Der Bremsvorgang genießt dabei Priorität gegenüber dem Ausweichmanöver.

Als gattungsbildender Stand der Technik wird die DE 102 18 010 A1 angesehen. Hierin wird ein Verfahren zur Führung eines Kraftfahrzeugs auf einer Fahrbahn offenbart, bei dem ein Fahrassistenzsystem das Fahrzeug in einer Fahrspur einer Fahrbahn führt. Das Fahrassistenzsystem ist dabei so ausgelegt, dass bei der Annäherung des Fahrzeugs an ein, die Fahrbahnbreite beeinträchtigendes Hindernis und/oder bei Annäherung an eine geänderte Fahrbahnführung z. B. zu einer Kurve ein Abweichen des Fahrzeugs von der Fahrspur durch Lenkmaßnahmen des Fahrers zugelassen wird. Nach Passieren des Hindernisses bzw. nach Durchfahren der Kurve wird das Fahrzeug wieder in die ursprüngliche Fahrspur zurückgeführt.

Die Aufgabe wird erfindungsgemäß durch die Merkmale des Anspruchs 1 gelöst.

Das Verfahren berücksichtigt, dass einem Nutzfahrzeug mit oder ohne Anhänger auf Grund seiner Abmessungen weniger Platz für Fahrmanöver zur Verfügung steht. Der Fahrer des Nutzfahrzeugs wird z. B. vor Einfahrt in eine Kurve ausholen, um sein Fahrzeug in der Kurve innerhalb der Grenzen der Fahrbahn zu halten.

Das erfindungsgemäße Verfahren geht davon aus, dass der Fahrer auf einer Straße mit einer Fahrbahn je Fahrtrichtung bei Gegenverkehr sein Fahrzeug weg vom Gegenverkehr an den äußeren Rand seiner Fahrbahn lenken wird. Besonders bei der Begegnung zweier Nutzfahrzeuge wird auf diese Weise vermieden, dass der auftretende Luftstau die Lenkung der Fahrzeuge negativ beeinflusst. Im Zusammenhang mit der vorliegenden Erfindung wird davon ausgegangen, dass die Fahrbahn derjenige Bereich einer Straße ist, der dem Nutzfahrzeug zur Befahrung in einer Richtung zur Verfügung steht und der in Fahrtrichtung gesehen links und rechts durch eine durchgezogene und/oder eine gestrichelte Linie begrenzt wird. Unter Fahrspur wird in diesem Zusammenhang eine gedachte Linie z. B. die Ideallinie verstanden, auf der sich das Fahrzeug in Fahrtrichtung bewegt. Die gedachte Linie ist dabei von der linken und rechten Begrenzung der Fahrbahn etwa in gleicher Weise beabstandet.

Nach einer anderen Ausführungsform der Erfindung wird die Funktion des Fahrassistenzsystems bis zum Passieren des Hindernisses durch das Fahrzeug und/oder bis zum Ausgang der Kurve unterbrochen. Gleichermaßen wird berücksichtigt, dass der Fahrer angesichts eines Hindernisses an seinem rechten Fahrbahnrand innerhalb der Fahrbahn zur linken Fahrbahnbegrenzung hin ausweichen wird.

Vorteilhaft ist, dass die Funktion des an sich bekannten und im Nutzfahrzeug vorgesehenen Fahrassistenzsystems z. B. ein Spurführungssystem, lane guard system oder Ähnliches ein Abweichen des Fahrzeugs von der Fahrspur durch Lenkmaßnahmen zulässt. Eine Anpassung der Warnschwelle der Funktion des Fahrassistenzsystems erfolgt ab einer vorbestimmten Entfernung vor dem Hindernis bis zu einer vorbestimmten Entfernung nach Passieren des Hindernisses. Als Funktion des Fahrassistenzsystems kann z. B. ein akustisches, haptisches, optisches oder anderes Warnsignal gemeint sein. Denkbar ist auch, dass als Funktion des Fahrassistenzsystems ein automatisches Gegenlenken bei unbeabsichtigtem Überfahren der Fahrbahnbegrenzung oder ein automatischer Bremsvorgang gegeben ist.

Nach Passieren des Hindernisses setzt die planmäßige Funktion des Fahrassistenzsystems wie herstellerseits vorgesehen, wieder ein. Als Hindernis ist dabei ein entgegenkommendes Fahrzeug oder ein in Fahrtrichtung gesehen am äußeren rechten Fahrbahnrand angeordnetes Hindernis z. B. ein abgestelltes Fahrzeug gemeint.

Nach einer anderen Ausführungsform der Erfindung werden bei der Annäherung des Fahrzeugs an das Hindernis und/oder bei Änderung der Fahrbahnführung die Parameter der noch verfügbaren Fahrbahnbreite und/oder der Kurvenführung in ein Warnsystem des Fahrzeugs eingegeben. Darüber hinaus wird eine erforderliche Querabweichung der Fahrspur gegenüber der ursprünglich vorgegebenen Fahrspur bestimmt.

Die Führung der Fahrspur innerhalb der Fahrbahn kann als Funktion der Querabweichung des Fahrzeugs von der Mitte der Fahrbahn über der zurückgelegten Strecke des Fahrzeugs auf der Straße angegeben werden. Um diese Funktion zu erzeugen, werden abhängig von den Straßen - und Umgebungsparametern drei Stützpunkte erzeugt. Diese Stützpunkte werden mittels eines geeigneten Polynomansatzes so verbunden, dass eine Funktion mit stetigem Krümmungsverlauf entsteht.

Nach einer anderen Ausführungsform der Erfindung ist die Querabweichung der Fahrspur gegenüber der seitens des Fahrassistenzsystems ursprünglich vorgegebenen Fahrspur von dem Hindernis weggerichtet. Hierdurch wird die Gefahr einer Berührung des Nutzfahrzeugs mit dem Hindernis deutlich reduziert.

Nach einer weiteren Ausführungsform der Erfindung ist bei der Änderung der Fahrbahnführung zu einer Kurve die Querabweichung der Fahrspur gegenüber der ursprünglich vorgegebenen Fahrspur zur Außenseite der Kurve gerichtet. Vorteilhaft daran ist, dass das bordeigene Fahrassistenzsystem ein Überqueren der in Fahrtrichtung gesehen linken oder rechten Fahrbahnbegrenzung vor Einfahrt in die Kurve ohne Anstoß einer funktionsgemäßen Warnung oder ohne automatisches Gegenlenken oder Bremsen tolerierte.

Nach einer anderen Ausführungsform der Erfindung reduziert sich das Maß der Querabweichung mit der Zunahme der Größe des Kurvenradius.

Das Verfahren berücksichtigt, dass das Nutzfahrzeug bei engen Kurvenradien auf einer Fahrspur geführt wird, deren Querabweichung von der ursprünglichen in der Mitte der Fahrbahn verlaufenden Fahrspur größer ist, als bei weiten Kurvenradien.

Weitere Merkmale, Einzelheiten und Vorteile der Erfindung ergeben sich aus der folgenden Beschreibung verschiedener Ausführungsformen der Erfindung sowie anhand der Zeichnung. Hierbei zeigen:

Fig. 1    das Nutzfahrzeug bei Durchfahrung einer Linkskurve,

Fig. 2    das Nutzfahrzeug beim Ausweichvorgang gegenüber einem entgegenkommenden Fahrzeug,

Fig. 3    das Nutzfahrzeug beim Ausweichvorgang eines Randhindernisses und

Fig. 4    die Funktion der Querabweichung gegenüber der zurückgelegten Strecke.

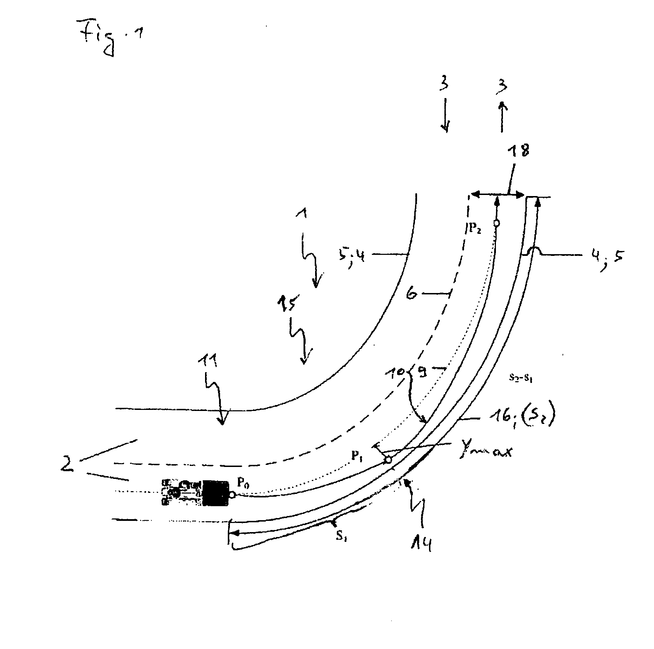

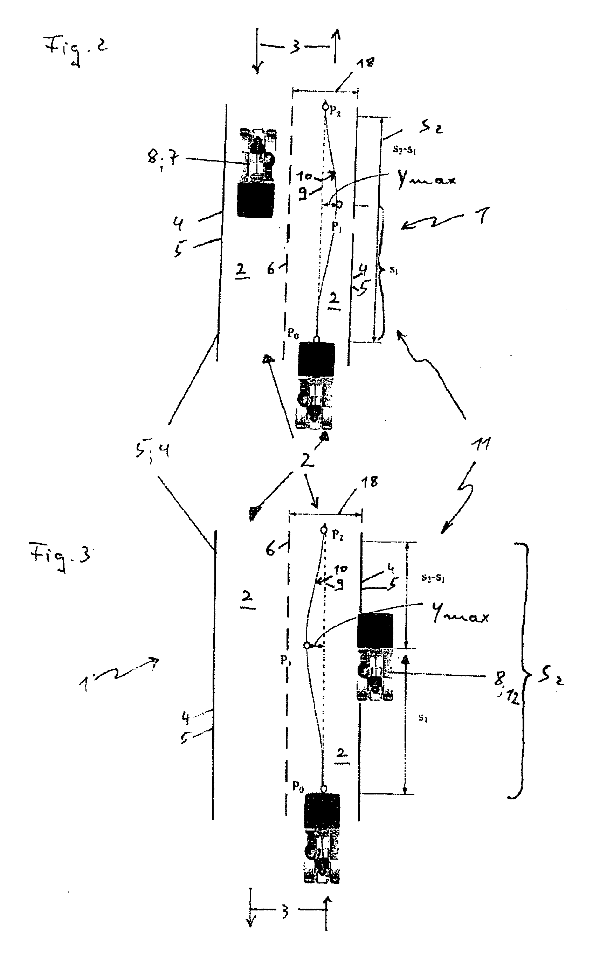

Die Fig. 1 bis 3 zeigen einen Straßenabschnitt 1 mit je einer Fahrbahn 2 in einer Fahrtrichtung 3. Beide Fahrbahnen 2 sind in Fahrtrichtung 3 gesehen an den äußeren rechten Rändern 4 durch je eine durchgezogene Linie 5 begrenzt. Gegeneinander sind die beiden Fahrbahnen durch eine gestrichelte Mittellinie 6 voneinander getrennt. In der Fig. 2 ist ein entgegenkommendes Nutzfahrzeug 7 als Hindernis 8 dargestellt. Seitens des an sich bekannten Fahrassistenzsystems wird das Nutzfahrzeug entlang einer Fahrspur 9 geführt, die von der in Fahrtrichtung 3 gesehen rechten durchgezogenen Linie 5 und der gestrichelten Mittellinie 6 in gleicher Weise beabstandet ist. Die verfahrensabhängige Fahrspur wird mit Bezugsziffer 10 bezeichnet.

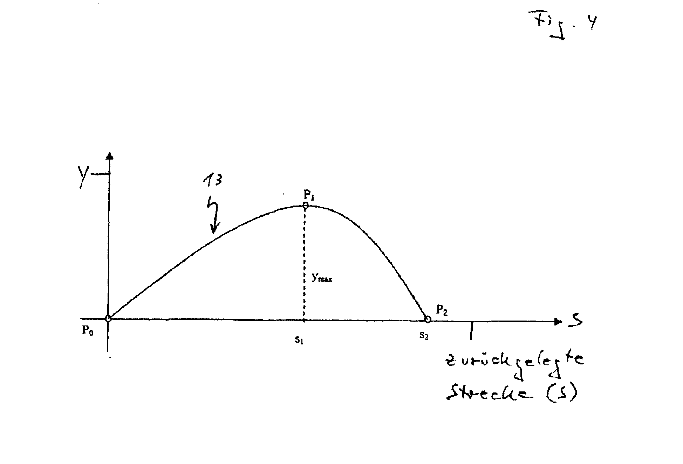

In den Fig. 1 bis 3 wird dargestellt, dass der Straßenverlauf 11 und Hindernisse 8 wie z. B. entgegenkommende Fahrzeuge 7 und am Rand der Fahrbahn 2 abgestellte Fahrzeuge 12 erkannt werden. Die Fahrspur 10 wird abweichend von einer durch das Fahrassistenzsystem vorgegebenen Fahrspur 9 als Funktion 13 der Querabweichung des Nutzfahrzeugs von der Fahrspur 9 über einen Straßenabschnitt 1 ermittelt. Der Straßenabschnitt 1 entspricht dabei der in Fig. 4 dargestellten, zurückgelegten Strecke. Zur Realisierung der Funktion 13 werden abhängig von Straßen- und

Umgebungsparametern Stützpunkte $P_0$, $P_1$ und $P_2$ erzeugt. Die Stützpunkte werden mittels eines Polynomansatzes derart verbunden, dass eine Funktion 13 mit stetigem Krümmungsverlauf entsteht (vgl. Fig. 4).

Für die Parametrierung der Stützpunkte $P_0$, $P_1$ und $P_2$ müssen die Kurvenkrümmung am Scheitelpunkt 14 der Kurve 15, die Kurvenlänge 16 und die Breite 18 der Fahrbahn 2 bekannt sein. Aus diesen Parametern können über Kennlinien die Lage der Stützpunkte $P_0$, $P_1$, $P_2$ für eine dem Fahrer optimal nachempfundene Fahrspur 10 abgeleitet werden. Exemplarisch ist hierzu in Fig. 1 der Ausholvorgang in einer Linkskurve 15 dargestellt. Der Stützpunkt $P_0$ bezeichnet den Beginn des Ausholvorgangs. Nach der Strecke $S_1$ wird am Stützpunkt $P_1$ die maximale Querabweichung von $y_{max}$ erreicht. Am Stützpunkt $P_2$ ist der Ausholvorgang am Kurvenende nach der Strecke $S_2$ beendet. Der Parameter für die maximale Querabweichung $y_{max}$ ist von der Kurvenkrümmung am Scheitelpunkt 14 und der Breite 18 der Fahrbahn 2 abhängig. Die Lage des Querabweichungsmaximums $y_{max}$ wird nur von der Strecke $S_2$ abhängig vorgegeben, die der Kurvenlänge 16 entspricht. Damit ergeben sich die Kennlinienfelder nach Gleichung (1):

Gleichung (1):

$$y_{max} = y_{max} \text{ (maximale Kurvenkrümmung 14; Breite 18 der Fahrbahn 2)}$$

$S_1 = S_1$ (Kurvenlänge 16)
$S_2 =$ Kurvenlänge 16

Für den in Fig. 2 dargestellten Ausweichvorgang bei entgegenkommenden Fahrzeugen 7 werden in analoger Vorgehensweise die Stützpunkte $P_0$, $P_1$, $P_2$ bestimmt. Der Ausweichvorgang beginnt am Stützpunkt $P_0$ bei einer Entfernung $S_1$ vor dem Hindernis 8 (hier, entgegenkommendes Fahrzeug 7). Am Stützpunkt $P_1$ befindet sich das Fahrzeug auf Höhe des Hindernisses 8. Im Stützpunkt $P_1$ wird die maximale Querabweichung ymax vorgegeben. Nach der Strecke $S_2$ ist der Ausweichvorgang am Stützpunkt $P_2$ beendet. Die Streckenlängen S1 und S2 werden entsprechend Gleichung (2) als konstante Parameter angenommen, die maximale Querabweichung ymax ist dabei von der Spurbreite abhängig:

Gleichung (2):

$$ymax = ymax \text{ (Breite 18 der Fahrbahn 2)}$$

S1 = konstant
S2 = konstant

Fig. 3: Die verfahrensabhängige Ermittlung der Fahrspur 10 kann auch zum Ausweichen von am Rand der Fahrbahn 2 angeordneten Hindernissen 8 verwendet werden. Unter einem am Rand der Fahrbahn 2 angeordneten Hindernis 8 wird hierbei ein Objekt verstanden, das in die Fahrbahn hineinragt und damit das Ausweichen innerhalb der eigenen Fahrbahn 2 erforderlich macht. Auch hier wird die Entfernung zum Hindernis 8 (hier: Strecke $S_1$) und die Länge der Fahrspur 10 (hier: $S_2$) als konstant angenommen. Die maximale Querabweichung $y_{max}$ ist entsprechend Gleichung (3) von der Breite 18 der Fahrbahn 2 bestimmt:

Gleichung (3):

$$y_{max} = y_{max} \text{ (Breite 18 der Fahrbahn 2)}$$

$S_1 =$ konstant
$S_2 =$ konstant
$S_2 =$ konstant

Die durch Kennfelder parametrierten Stützpunkte $P_0$, $P_1$ und $P_2$ werden, wie in Fig. 4 dargestellt, durch einen Polynomansatz interpoliert. Dadurch wird eine hinreichend glatte Bahn mit stetigen Krümmungsübergängen erzeugt.

Bei allen in den Fig. 1 bis 3 dargestellten Situationen werden die für die Ermittlung der Fahrspur 10 relevanten Parameter mittels am Markt verfügbarer Sensoren gewonnen. Die Kurvenkrümmung 14 und die Kurvenlänge 16 sind in digitalen Karten z. B. in Navigationssystemen in Vorausschau verfügbar. Die Breite 18 der Fahrbahn 2 kann z. B. aus einer Spurerkennungskamera gewonnen werden. Informationen zu Hindernissen 8 in Form von Gegenverkehr und zu am äußeren Rand 4 der Fahrbahn 2 abgestellten Fahrzeugen 12 sind aus der Umfeldsensorik beziehbar. Die durch das Verfahren ermittelte Fahrspur 10 kann dazu genutzt werden, Warnschwellen zu beeinflussen oder aktiv das Fahrzeug auf der Fahrbahn 2 zu halten.

Es ist vorstellbar, dass bei Überschreitung einer vorbestimmten maximalen Abweichung von der Fahrspur 9 durch das Fahrzeug automatisch Gegenlenkmaßnahmen erfolgen oder das Warnsignal des Fahrassistenzsystems einsetzt.

Bezugsziffern:

| 1 | Straßenabschnitt |
|---|---|
| 2 | Fahrbahn |
| 3 | Fahrtrichtung |
| 4 | äußerer Fahrbahnrand |
| 5 | durchgezogene Linie |
| 6 | Mittellinie |
| 7 | entgegenkommendes Fahrzeug |
| 8 | Hindernis |
| 9 | ursprüngliche Fahrspur nach Vorgabe des Fahrassistenzsystems |
| 10 | verfahrensabhängige Fahrspur |
| 11 | Straßenverlauf |
| 12 | geparkte Fahrzeuge |
| 13 | Funktion |
| 14 | Kurvenkrümmung am Scheitelpunkt |
| 15 | Kurve |
| 16 | Kurvenlänge |
| 17 | |
| 18 | Breite der Fahrbahn |
| $P_0$ | Stützpunkt |
| $P_1$ | Stützpunkt |
| $P_2$ | Stützpunkt |
| $y_{max}$ | maximale Querabweichung |
| $S_1$ | Strecke |
| $S_2$ | Strecke |
| S | Strecke |

**Patentansprüche**

1. Verfahren zur Führung eines Nutzfahrzeugs auf einer Fahrbahn (2), wobei ein Fahrassistenzsystem das Fahrzeug innerhalb der Fahrbahn (2) auf einer vorgegebenen Fahrspur führt und ein Navigationssystem den Verlauf der Fahrbahnführung beisteuert, wobei das Fahrassistenzsystem so ausgelegt wird, dass bei der Annäherung des Fahrzeugs an eine Änderung der Fahrbahnführung zu einer Kurve (15) ein Abweichen des Fahrzeugs von der Fahrspur durch Lenkmaßnahmen zugelassen ist und dass zum Ausgang der Kurve das Fahrzeug wieder auf die ursprüngliche Fahrspur zurückgeführt wird und dass die Führung der Fahrspur innerhalb der Fahrbahn als Funktion der Querabweichung des Fahrzeugs von der Mitte der Fahrbahn über der zurückgelegten Strecke des Fahrzeugs auf der Straße angegeben wird und zur Bildung der Funktion in Abhängigkeit von Straßen- und Umgebungsparametern drei Stützpunkte erzeugt werden, die mittels eines Polynomansatzes so verbunden werden, dass eine Funktion mit stetigem Krümmungsverlauf entsteht, **dadurch gekennzeichnet, dass** das Fahrzeug vor der Einfahrt in die Kurve (15) zu dem, relativ zur Kurve äußeren Rand der Fahrbahn gelenkt wird und in der Kurve (15) innerhalb der Grenzen der Fahrbahn gehalten wird, wobei bei der Änderung der Fahrbahnführung zu einer Kurve (15) die Querabweichung der Fahrspur gegenüber der ursprünglich vorgegebenen Fahrspur (9) zur Außenseite der Kurve (15) gerichtet ist.

2. Verfahren nach Anspruch 1, **dadurch gekennzeichnet, dass** die Fahrspur (9) innerhalb der Fahrbahn (2) der Ideallinie entspricht.

**3.** Verfahren nach Anspruch 1, **dadurch gekennzeichnet, dass** bei der Annäherung des Fahrzeugs an das Hindernis (8) und/oder bei Änderung der Fahrbahnführung die Parameter der noch verfügbaren Fahrbahnbreite (18) und/oder der Kurvenführung in ein Warnsystem des Fahrzeugs eingegeben und darüber hinaus eine erforderliche Querabweichung der Fahrspur gegenüber der ursprünglich vorgegebenen Fahrspur (9) bestimmt wird.

**4.** Verfahren nach Anspruch 3, **dadurch gekennzeichnet, dass** die Querabweichung der Fahrspur gegenüber der durch das Fahrassistenzsystem ursprünglich vorgegebenen Fahrspur (9) von dem Hindernis (8) weggerichtet ist.

**5.** Verfahren nach Anspruch 3, **dadurch gekennzeichnet, dass** sich das Maß der Querabweichung mit Zunahme der Größe des Kurvenradius reduziert.

## Claims

**1.** Method for guiding a utility vehicle on a carriageway (2), wherein a driving assistance system guides the vehicle on a predefined course within the lane (2) and a navigation system contributes the profile of the lane, wherein the driving assistance system is configured in such a way that when the vehicle approaches a change in the profile of the lane leading to a bend (15), a deviation of the vehicle from the course is permitted by steering measures, and in that at the exit from the bend the vehicle is returned again to the original course, and in that the guiding of the course within the lane is given as a function of the lateral deviation of the vehicle from the centre of the lane over the distance travelled by the vehicle on the road and three reference points are generated for forming the function in dependence on road parameters and environmental parameters, which reference points are connected by means of a polynomial approach in such a way that a function with a constant curvature profile is produced, **characterized in that** before the entry into the bend (15) the vehicle is steered with respect to the edge of the lane which is the outside one relative to the bend and is kept within the boundaries of the lane in the bend (15), wherein when the profile of the lane changes with respect to a bend (15) the lateral deviation of the course with respect to the originally predefined course (9) is oriented with respect to the outside of the bend (15).

**2.** Method according to Claim 1, **characterized in that** the course (9) within the lane (2) corresponds to the ideal line.

**3.** Method according to Claim 1, **characterized in that** when the vehicle approaches the obstacle (8) and/or when there is a change in the profile of the lane the parameters of the still available lane width (18) and/or the profile of the bend are input into a warning system of the vehicle and, furthermore, a necessary lateral deviation of the course with respect to the originally predefined course (9) is determined.

**4.** Method according to Claim 3, **characterized in that** the lateral deviation of the course with respect to the course (9) originally predefined by the driving assistance system is directed away from the obstacle (8).

**5.** Method according to Claim 3, **characterized in that** the degree of lateral deviation decreases as the magnitude of the bend radius increases.

## Revendications

**1.** Procédé de guidage d'un véhicule utilitaire sur une piste de déplacement (2), un système d'assistance à la conduite conduisant le véhicule sur une trajectoire de déplacement prédéterminée à l'intérieur de la piste de déplacement (2) et un système de navigation contribuant à commander l'évolution du guidage sur la piste de conduite,

le système d'assistance à la conduite étant conçu de telle sorte que lorsque le véhicule s'approche d'une modification constituée d'une courbe (15) de la piste de déplacement, un écart du véhicule par rapport à la trajectoire de déplacement est amené par des dispositions de conduite, que le véhicule est ramené sur la trajectoire de déplacement initiale à la sortie de la courbe,

que le guidage sur la trajectoire de déplacement à l'intérieur de la piste de déplacement est défini en tant que fonction de l'écart latéral du véhicule par rapport au centre la piste de déplacement sur la distance parcourue par le véhicule sur la chaussée et

que pour former la fonction selon les paramètres de la chaussée et de l'environnement, trois points d'appui sont formés et reliés à l'aide d'une stratégie polynomiale de manière à obtenir une fonction à évolution constante en courbe, **caractérisé en ce que**

avant d'entrer dans la courbe (15), le véhicule est guidé vers le bord de la piste de déplacement situé à l'extérieur de la courbe et est maintenu dans la courbe (15) à l'intérieur des limites de la piste de déplacement, l'écart latéral de la trajectoire de déplacement par rapport à la trajectoire de déplacement (9) initialement définie étant orienté vers le côté extérieur de la courbe (15) en cas de modification du guidage sur une courbe (15) de la piste de déplacement.

2.  Procédé selon la revendication 1, **caractérisé en ce que** la trajectoire de déplacement (9) correspond à la ligne idéale à l'intérieur de la piste de déplacement (2).

3.  Procédé selon la revendication 1, **caractérisé en ce que** lorsque le véhicule approche d'un obstacle (8) et/ou lorsque le guidage sur la piste de déplacement se modifie, les paramètres de la largeur (18) encore disponibles de la piste de déplacement et/ou du guidage en courbe sont introduits dans un système d'avertissement du véhicule et **en ce que** l'écart latéral nécessaire de la trajectoire de déplacement par rapport à la trajectoire de déplacement (9) initialement prédéterminée est en outre déterminé.

4.  Procédé selon la revendication 3, **caractérisé en ce que** l'écart latéral entre la trajectoire de déplacement et la trajectoire de déplacement (9) initialement définie par le système d'assistance à la conduite s'éloigne de l'obstacle (8).

5.  Procédé selon la revendication 3, **caractérisé en ce que** le niveau de l'écart latéral se réduit lorsque le rayon de la courbe augmente.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10316413
- DE 102005025387 A1
- WO 2007145564 A1
- DE 102005002760 A1
- DE 10218010 A1